# EUROPEAN PATENT APPLICATION

(11) **EP 2 444 731 A1**
(43) Date of publication of application: **25.04.2012**
(21) Application number: 10788942.0
(22) Date of filing: 17.06.2010
(51) Int. Cl.: F24C 3/00

(54) **MULTIFUNCTIONAL ENERGY-SAVING AND ENVIRONMENTAL-FRIENDLY GAS STOVE AND USING METHOD THEREOF**

(30) Priority: 16.06.2009 CN 200910108304
(71) Applicant: LAM Kwong Yung, Hong Kong (CN)
(72) Inventor: LAM Kwong Yung, Hong Kong (CN)
(74) Representative: Perani, Aurelio
(86) International application number: PCT/CN2010/074008
(87) International publication number: WO 2010/145546

(57) **Abstract**

A multifunctional Energy-saving and environmental-friendly gas stove and a using method are provided. The multifunctional energy-saving and environmental-friendly gas stove includes a main body (20), a stove head (15), and a first heat exchange device for collecting residual heat of waste gas produced by the stove head (15). The first heat exchange device is a first metal tube (25) provided in a cavity (100) for conducting waste gas. A second heat exchange device (60) for recovering the thermal energy of combusted waste gas is further included. The gas stove can take full use of the energy of combusted waste gas, and improve the utilization of thermal energy.

## Description

### FIELD OF THE UTILITY MODEL

The present invention relates to a multifunctional energy-saving and environmental-friendly gas stove.

### BACKGROUND OF THE UTILITY MODEL

At present, stoves are usually used for food processing in hotels and public units. For a common stove, water is first heated through a stove head, and then the obtained steam is introduced into the stove to heat food. However, there are some disadvantages for the existing stove that the discharged combusted waste gas takes away too much energy and the utilization of thermal efficiency is not high enough.

### SUMMARY OF THE UTILITY MODEL

A first objective of the present invention is to provide a multifunctional energy-saving and environmental-friendly gas stove which takes full use of energy, aiming at the drawbacks that the discharged combusted waste gas takes away too much energy and the utilization of thermal efficiency is not high enough for such stove in the prior art.

A second objective of the present invention is to provide a using method for a multifunctional energy-saving and environmental-friendly gas stove which takes full use of energy, aiming at the drawbacks that the discharged combusted waste gas takes away too much energy and the utilization of thermal efficiency is not high enough for the stove in the prior art.

The technical solution for achieving the first objective of the present invention is as follows: a multifunctional energy-saving and environmental-friendly gas stove, wherein comprising a main body, a stove head for converting water into steam by usage of gas or combusting gas to produce thermal energy, and a first heat exchange device for collecting residual heat of combusted waste gas produced by the firing of stove head; the multifunctional energy-saving and environmental-friendly gas stove also comprises a device for recovering the combusted waste gas containing thermal energy.

In the multifunctional energy-saving and environmental-friendly gas stove, the main body is in the form of an sealed housing that can be opened, which is provided with a cavity for accommodating cooked food or steam inside; a first heat exchange device is arranged in the sealed housing by which a heat exchange between the combusted waste gas and the steam in the cavity is implemented; wherein the first heat exchange device is in the form of a first metal tube that is arranged within the sealed housing and used for conducting the combusted waste gas.

In the multifunctional energy-saving and environmental-friendly gas stove, the main body is provided with a pressure relief device for automatically releasing the steam when steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with a second heat exchange device which is provided with a water tank from outside.

In the multifunctional energy-saving and environmental-friendly gas stove, the main body is in the form of an sealed housing that can be opened, which is provided with a cavity for accommodating cooked food or steam inside; a third heat exchange device is arranged outside of the housing by which a heat exchange between the combusted waste gas and the steam in the cavity is implemented; wherein the third heat exchange device is in the form of a second metal tube for conducting the combusted waste gas.

In the multifunctional energy-saving and environmental-friendly gas stove, the main body is provided with a rotary device; a support connected with a baffle for placing the food is arranged below the rotation axis of the rotary device.

In the multifunctional energy-saving and environmental-friendly gas stove, a channel surrounding the second metal tube is arranged in the sealed housing for conducting the steam.

In the multifunctional energy-saving and environmental-friendly gas stove, a circulating fan is arranged on the sealed housing for driving the steam with residual heat from the cavity to have a circular flow between the cavity (100) and the channel.

In the multifunctional energy-saving and environmental-friendly gas stove, the bottom of the second metal tube is used for collecting the combusted waste gas; the main body is provided with a pressure relief device for automatically releasing the steam when the steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with a second heat exchange device which is provided with a water tank from outside.

In the multifunctional energy-saving and environmental-friendly gas stove, the multifunctional energy-saving and environmental-friendly gas stove is also provided with an electronic control device for controlling the humidity, temperature, speed, time and heat exchange required by the food inside the cavity.

The technical solution for achieving the second objective of the present invention is as follows: a method for heating food by a multifunctional energy-saving and environmental-friendly gas stove, wherein the method comprises the following steps:
S1: setting fire to a stove head to heat water into steam or produce thermal energy, heating food with the steam into a sealing housing, and rotating a rotary device to provide a uniform heating for the food;
S2: collecting combusted waste gas with residual heat produced by the firing of stove head, and driving the steam from the cavity to have a heat exchange with the combusted waste gas in the first heat exchange device by a circular fan before the combusted waste gas reaches a second heat exchange device;
S3: releasing steam with residual heat from the cavity through a pressure relief device when the steam pressure in the cavity is too high, mixing the released steam with the waste gas at the second heat exchange device to obtain a mixed gas, implementing a heat exchange between the mixed gas at the second heat exchange device and water outside of the second heat exchange device, and discharging the mixed gas from the multifunctional energy-saving and environmental-friendly gas stove.

When implementing the multifunctional energy-saving and environmental-friendly gas stove of the present invention, the following advantageous effect can be achieved:

In the present invention, the multifunctional energy-saving and environmental-friendly gas stove comprises a main body, a stove head for converting water into steam by usage of gas or combusting gas to produce thermal energy, and a heat exchange device for collecting residual heat of combusted waste gas produced by the stove head; the multifunctional energy-saving and environmental-friendly gas stove also comprises a device for recovering thermal energy of the combusted waste gas. The multifunctional energy-saving and environmental-friendly gas stove can take full use of the energy of combusted waste gas and improve the utilization of thermal energy.

### BRIEF DESCRIPTION OF THE DRAWINGS

The present invention will be further described with reference to the accompanying drawings and embodiments in the following. In the Figures:
Figure 1 is a structure diagram for a first embodiment of the multifunctional energy-saving and environmental-friendly gas stove in the present invention;
Figure 2 is a structure diagram for a second embodiment of the multifunctional energy-saving and environmental-friendly gas stove in the present invention; and
Figure 3 is a vertical view for the support of the rotary device in Figure 2.

### DETAILED DESCRIPTION OF THE PREFERRED EMBODIMENT

To make the objective, technical solution and advantage of the present invention be understood more clearly, now the present invention will be described in detail with reference to the accompanying drawings and embodiments in the following. It should be understood that the specific embodiments described herein are only for the purpose of illustrating the present invention, but not for limiting the present invention.

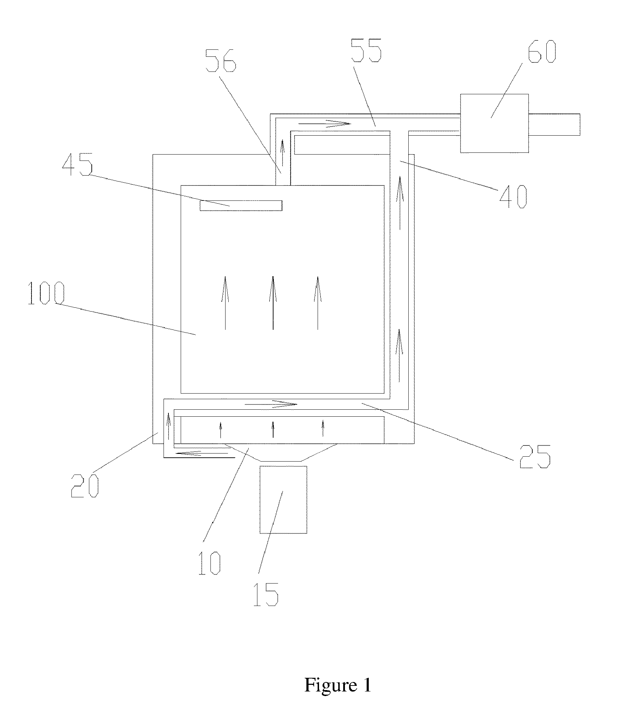

Figure 1 illustrates the multifunctional energy-saving and environmental-friendly gas stove in a first embodiment of the present invention, comprising a main body, a stove head 15 for converting water into steam by usage of gas or combusting gas to produce thermal energy, and a heat exchange device for collecting residual heat of waste gas produced by combustion at the stove head 15. The multifunctional energy-saving and environmental-friendly gas stove further comprises a device for recovering thermal energy of the combusted waste gas.

Wherein, the heat exchange device comprises a gas-collection apparatus for collecting the waste gas produced by the combustion at the stove head 15. The main body is in the form of a sealed housing 20 that can be opened, inside which is provided with a cavity 100 for accommodating cooked food or steam. In the cavity 100 a first heat exchange device is arranged, by which a circular heat exchange between the combusted waste gas in the heat exchange device and the steam or the residual heat produced after cooking in the sealed housing 20 is happened. The first heat exchange device is in the form of a first metal tube 25 that is arranged within the cavity 100 for conducting the combusted waste gas. The sealed housing 20 is made of metal and is comprised of an internal and external wall. The square cavity 100 is formed inside the internal wall while the first metal tube 25 drills through the internal wall. Meanwhile, the steam in a pan 10 moves upward, as a result, it may heat the food 45 and further move upward only after heat exchanging with the first metal tube 25. The waste gas completing heat exchange moves upward through a second conduit 40 provided between the internal and external walls. In order to prevent the steam pressure inside the seal housing too high, a pressure relief device 56 is arranged on top of the sealed housing. The pressure relief device 56 is connected with a first conduit 55 for recovering released steam from outside and the second conduit 40 is arranged connecting the external wall of the first conduit 55 for receiving the waste gas discharged from the first heat exchange device. The other end of the first conduit 55 is connected with a second heat exchange device 60 which is provided with a water tank from outside.

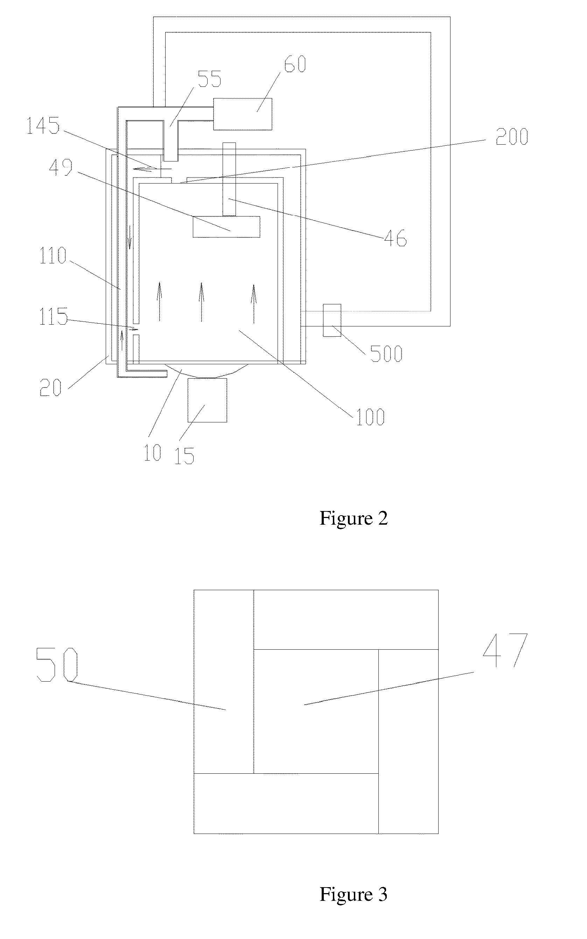

Figure 2 and Figure 3 illustrate a second embodiment of the present invention. In this embodiment, the main body is in the form of a sealed housing 20 that can be opened, which is provided with a cavity 100 for accommodating cooked food or steam inside. The housing of the cavity 100 is provided with a third heat exchange device by which a heat exchange between the combusted waste gas in the gas-collection apparatus and the steam or the residual heat after baking in the seal housing is happened. The third heat exchange device is in the form of a second metal tube 110 that is arranged on the internal wall of the cavity for conducting the combusted waste gas. In the embodiment, the main body is provided with a rotary device which comprises a rotation axis 46 fixed on the sealed housing 20 and a support 49 below the rotation axis 46. The support 49 is further connected with a baffle 50 for placing the food. The food is placed as shown in Figure 3, in which a reference sign 47 refers to an aperture for the rising of steam, and four blocks surrounding the aperture for the rising of steam 47 above the support 49 determine the way for placing the food required to be processed. During processing, the rotary device is continuously rotating to provide a uniform heating for the food. Besides, a channel surrounding the second metal tube 110 is arranged on the internal wall on top of the sealed housing for an outflow of the steam. Moreover, the housing is provided with a circulating fan 145 which utilizes residual heat for heating food. The bottom of the second metal tube 110 is open to the combusted waste gas in the gas-collection device. The main body is provided with a pressure relief device for automatically releasing the steam when steam pressure inside the cavity is too high. The pressure relief device is connected with a first conduit 55 from outside for recovering the released steam, of which the external wall is connected with the top of the second metal tube 110. The other end of the first conduit 55 is connected with a second heat exchange device 160 which is provided with a water tank from outside.

The using method for the second embodiment is as follows: first of all, the pan 10 is heated through the stove head 15 with steam being produced to move upward, and the rotary device is rotating at the same time to provide a uniform heating for food. The steam moves upward, passes through an aperture 200, turns left, moves downward along a pipe outside of the second metal tube 110, and then enters the cavity through an aperture 115 to heat food, with a heat exchange between the steam and the waste gas in the second metal tube 110. When the steam pressure is too high, the pressure relief device 56 is started so that the mixed gas of steam and released waste gas may experience a heat exchange with water at the second heat exchange device 160 before being released outside. Meanwhile, the circulating fan is further started to promote the flow of steam.

Additionally, the pan 10 in the second embodiment can be in the form of a ceramic plate. During usage, the ceramic plate is heated through the stove head 15 to bake or fry the food in the cavity. The difference from the steam heating is that it is needed to introduce steam from a steam generator 500 during baking, while it is needed to control the steam inside during frying. In order to control the humidity, temperature, speed and time required by the food inside the cavity of the multifunctional energy-saving and environmental-friendly gas stove, a programmable electronic device is arranged within the housing.

The using method for the multifunctional energy-saving and environmental-friendly gas stove of the present invention comprises the following steps:
S1: set fire to a stove head to heat water into steam or produce thermal energy by firing of the stove head, the produced steam or thermal energy entering into a sealing housing for heating food, and rotate a rotary device to provide a uniform heating for the food;
S2: collecting combusted waste gas with residual heat produced by the stove head through a gas-collection device, and carrying out circular heating by utilization of the combusted waste gas in a first heat exchange device and steam with residual heat after cooking the food through a circular fan before the combusted waste gas reaches a second heat exchange device;
S3: releasing steam with residual heat discharged from the stove through a pressure relief device when steam pressure in a cavity is too high, mixing the released steam with the waste gas at the second heat exchange device to obtain a mixed gas, implementing an exchange between the mixed gas at the second heat exchange device and water outside of the second heat exchange device, and discharging the mixed gas from the multifunctional energy-saving and environmental-friendly gas stove.

What mentioned above are only preferred embodiments for the present invention but not to limit the present invention. Any modification, equivalent change and improvement included in the spirit and principle of the present invention should be included in the scope of protection of the present invention.

## Claims

1. A multifunctional energy-saving and environmental-friendly gas stove, **characterized in that** comprising a main body and a stove head for converting water into steam by usage of gas or combusting gas to produce thermal energy; the multifunctional energy-saving and environmental-friendly gas stove also comprises a device for recovering the combusted waste gas containing thermal energy.

2. The multifunctional energy-saving and environmental-friendly gas stove of claim 1, **characterized in that** the main body is in the form of an sealed housing that can be opened, which is provided with a cavity for accommodating cooked food or steam inside; a first heat exchange device is arranged in the sealed housing by which a heat exchange between the combusted waste gas and the steam in the cavity is implemented; wherein the first heat exchange device is in the form of a first metal tube that is arranged within the sealed housing and used for conducting the combusted waste gas.

3. The multifunctional energy-saving and environmental-friendly gas stove of claim 2, **characterized in that** the main body is provided with a pressure relief device for automatically releasing the steam when steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with a second heat exchange device which is provided with a water tank from outside.

4. The multifunctional energy-saving and environmental-friendly gas stove of claim 2, **characterized in that** the main body is in the form of an sealed housing that can be opened, which is provided with a cavity for accommodating cooked food or steam inside; a third heat exchange device is arranged outside of the housing by which a heat exchange between the combusted waste gas and the steam in the cavity is implemented; wherein the third heat exchange device is in the form of a second metal tube for conducting the combusted waste gas.

5. The multifunctional energy-saving and environmental-friendly gas stove of claim 4, **characterized in that** the main body is provided with a rotary device; a support connected with a baffle for placing the food is arranged below the rotation axis of the rotary device.

6. The multifunctional energy-saving and environmental-friendly gas stove of claim 5, **characterized in that** a channel surrounding the second metal tube is arranged in the sealed housing for conducting the steam.

7. The multifunctional energy-saving and environmental-friendly gas stove of claim 6, **characterized in that** a circulating fan is arranged on the sealed housing for driving the steam with residual heat from the cavity to have a circular flow between the cavity (100) and the channel.

8. The multifunctional energy-saving and environmental-friendly gas stove of claim 7, **characterized in that** the bottom of the second metal tube is used for collecting the combusted waste gas; the main body is provided with a pressure relief device for automatically releasing the steam when the steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with a second heat exchange device which is provided with a water tank from outside.

9. The multifunctional energy-saving and environmental-friendly gas stove of claim 1, **characterized in that** the multifunctional energy-saving and environmental-friendly gas stove is also provided with an electronic control device for controlling the humidity, temperature, speed, time and heat exchange required by the food inside the cavity.

10. A method for heating food by a multifunctional energy-saving and environmental-friendly gas stove, **characterized in that** the method comprises the following steps:
S1: setting fire to a stove head to heat water into steam or produce thermal energy, heating food with the steam into a sealing housing, and rotating a rotary device to provide a uniform heating for the food;
S2: collecting combusted waste gas with residual heat produced by the firing of stove head, and driving the steam from the cavity to have a heat exchange with the combusted waste gas in the first heat exchange device by a circular fan before the combusted waste gas reaches a second heat exchange device;
S3: releasing steam with residual heat from the cavity through a pressure relief device when the steam pressure in the cavity is too high, mixing the released steam with the waste gas at the second heat exchange device to obtain a mixed gas, implementing a heat exchange between the mixed gas at the second heat exchange device and water outside of the second heat exchange device, and discharging the mixed gas from the multifunctional energy-saving and environmental-friendly gas stove.

## Amended claims

### Amended claims under Art. 19.1 PCT

**1.** A multifunctional energy-saving and environmental-friendly gas stove, **characterized in that** comprising a main body and a stove head for converting water into steam by usage of gas or combusting gas to produce thermal energy; wherein the multifunctional energy-saving and environmental-friendly gas stove also comprises a second heat exchange device for recovering the combusted waste gas containing thermal energy; the main body is in the form of an sealed housing that can be opened, which is provided with a cavity for accommodating cooked food or steam inside; a first heat exchange device is arranged in the sealed housing by which a heat exchange between the combusted waste gas and the steam in the cavity is implemented; the first heat exchange device is in the form of a first metal tube that is arranged within the sealed housing and used for conducting the combusted waste gas.

**2.** The multifunctional energy-saving and environmental-friendly gas stove of claim 1, **characterized in that** the main body is provided with a pressure relief device for automatically releasing the steam when steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with the second heat exchange device which is provided with a water tank from outside

**3.** The multifunctional energy-saving and environmental-friendly gas stove of claim 1, **characterized in that** the main body is in the form of an sealed housing that can be opened, which is provided with a cavity for accommodating cooked food or steam inside; a third heat exchange device is arranged outside of the housing by which a heat exchange between the combusted waste gas and the steam in the cavity is implemented; wherein the third heat exchange device is in the form of a second metal tube for conducting the combusted waste gas.

**4.** The multifunctional energy-saving and environmental-friendly gas stove of claim 3, **characterized in that** the main body is provided with a rotary device; a support connected with a baffle for placing the food is arranged below the rotation axis of the rotary device.

**5.** The multifunctional energy-saving and environmental-friendly gas stove of claim 4, **characterized in that** a channel surrounding the second metal tube is arranged in the sealed housing for conducting the steam.

**6.** The multifunctional energy-saving and environmental-friendly gas stove of claim 5, **characterized in that** a circulating fan is arranged on the sealed housing for driving the steam with residual heat from the cavity to have a circular flow between the cavity and the channel.

**7.** The multifunctional energy-saving and environmental-friendly gas stove of claim 6, **characterized in that** the bottom of the second metal tube is used for collecting the combusted waste gas; the main body is provided with a pressure relief device for automatically releasing the steam when the steam pressure inside the cavity is too high; the pressure relief device is connected with a first conduit for recovering the released steam from outside, and a second conduit is connected with the first conduit for receiving the combusted waste gas discharged from the first heat exchange device; the other end of the first conduit is connected with a second heat exchange device which is provided with a water tank from outside.

**8.** The multifunctional energy-saving and environmental-friendly gas stove of claim 1, **characterized in that** the multifunctional energy-saving and environmental-friendly gas stove is also provided with an electronic control device for controlling the humidity, temperature, speed, time and heat exchange required by the food inside the cavity.

**9.** A method for heating food by a multifunctional energy-saving and environmental-friendly gas stove, **characterized in that** the method comprises the following steps:
S1: setting fire to a stove head to heat water into steam or produce thermal energy, heating food with the steam into a sealing housing, and rotating a rotary device to provide a uniform heating for the food;
S2: collecting combusted waste gas with residual heat produced by the firing of stove head, and driving the steam from the cavity to have a heat exchange with the combusted waste gas in the first heat exchange device by a circular fan before the combusted waste gas reaches a second heat exchange device;
S3: releasing steam with residual heat from the cavity through a pressure relief device when the steam pressure in the cavity is too high, mixing the released steam with the waste gas at the second heat exchange device to obtain a mixed gas, implementing a heat exchange between the mixed gas at the second heat exchange device and water outside of the second heat exchange device, and discharging the mixed gas from the multifunctional energy-saving and environmental-friendly gas stove.

Statement under Art. 19.1 PCT
In accordance with Article 19 of Patent Cooperation Treaty, the applicant has amended the claims and deemed that the amended claims have novelty and inventiveness with respect to the document listed in the International Search Report. Specific reasons are as follows:
Document 1 discloses a cooking oven. According to description of lines 36-48 on page 2 of the specification, "in one construction, the wall A2 and door A3 of the square box A which forms the container or cooker, are heavily jacketed with heat insulating material B, except for a circular aperture A4 in the bottom........ a flue E may be carried away through the bottom wall and rear side of the container to chimney (not shown)". It is further pointed out that "in many cases the flue E may be unnecessary, and greater efficiency may thus be obtainable by its omission" in lines 100-102 on page 2 of the specification.

It can be seen from the accompanying drawings that a maximum utilization of thermal energy is achieved by making the oven be heavily jacketed with a layer of heat insulating material B from outside to avoid outgoing heat loss. The flue E passes through the heat insulating material B and carries the combusted waste gas of the stove head to the outside of the oven. In order to avoid the heat loss in the flue E, it is even desired that there is no presence of the flue E.

That is, document 1 considered that there was necessary heat loss in the flue E, while a recycle of this portion of thermal energy is not taken into consideration. On the other hand, since the flue E is disposed inside the heat insulting material B, the thermal energy cannot reach the interior of the box A for placing food.

Nevertheless, in the amended application, "the main body is in the form of an sealed housing that can be opened, which is provided with a cavity for accommodating cooked food or steam inside...... the first heat exchange device is in the form of a first metal tube that is arranged within the cavity and used for conducting the combusted waste gas". That is, the first metal tube can receive the combusted waste gas produced by firing of the stove head and introduce it into the cavity for accommodating food directly. In this way, a cyclic heat exchange is implemented between the thermal energy of combusted waste gas and the steam or the residual heat in the seal housing so as to recycle the combusted waste gas.

Therefore, the applicant deems that the amended claim 1 is essentially different from the technical solution of document 1, and document 1 hasn't provided any technical inspiration for achieving the objective of the present application as well. Thus the amended claim 1 has prominent substantive feature. Meanwhile, by employing the present application, the combusted waste gas of the stove head can be recycled, the utilization of thermal energy is enhanced and an energy-saving and environmental-friendly function is provided. Thus the present application has prominent advancement.

Therefore, the amended claims 1-9 have inventiveness with respect to document 1.
